# EUROPÄISCHE PATENTSCHRIFT

(11) **EP 0 771 245 B1**
(45) Veröffentlichungstag und Bekanntmachung des Hinweises auf die Patenterteilung: **18.11.1998**
(21) Anmeldenummer: 93917683.0
(22) Anmeldetag: 29.07.1993
(51) Int. Cl.: B23P 19/04

(54) **VORRICHTUNG ZUM BEFESTIGEN BOLZENFÖRMIGER ELEMENTE**
DEVICE FOR FASTENING BOLT-SHAPED ELEMENTS
DISPOSITIF DE FIXATION D'ELEMENTS EN FORME DE BOULONS

(30) Priorität: 31.07.1992 DE 4225282
(43) Veröffentlichungstag der Anmeldung: 07.05.1997
(73) Patentinhaber: MASCHINENBAU DIETER SCHMIDT, 93055 Regensburg (DE)
(72) Erfinder: SCHMIDT, Dieter, D-93138 Lappersdorf (DE)
(74) Vertreter: Graf, Helmut, Dipl.-Ing.
(86) Internationale Anmeldenummer: EP9302015
(87) Internationale Veröffentlichungsnummer: WO9403306

(56) Entgegenhaltungen:
- DE-A- 3 937 903
- DE-C- 3 448 219

## Beschreibung

Die Erfindung betrifft eine Vorrichtung zur Verwendung an einem in einer Presse montierten Werkzeug zum Befestigen bolzenförmiger Elemente, insbesondere Schrauben an einem Blech, einer Tafel oder dergl. entsprechend Oberbegriff Patentanspruch 1 wie z.B. aus DE-A-39 37 903 bekannt.

Vorrichtungen zum Befestigen bolzenförmiger Elemente, insbesondere Schrauben, an einem Blech, an einer Tafel oder dergl. sind aus verschiedenen Bereichen bekannt und gelangen insbesondere unter Rationalisierungsgesichtspunkten besonders häufig in Industriezweigen zum Einsatz, bei denen Bleche und/oder Tafeln verformt werden und mit den genannten Elementen, insbesondere mit Verbindungselementen zu versehen sind. Dabei hat es sich grundsätzlich bewährt, derartige Vorrichtungen mit ihrem sogenannten Stanzkopf an einer Presse derart zu montieren, daß im Verlauf der die endgültige Form erzeugenden Folgeschritte zu einem bestimmten Zeitpunkt mit dem verformenden Pressenhub gleichzeitig das Element am Blech- oder Tafelteil angebracht wird. Die Technik des Anbringens, sei es durch Nieten und/oder Stanzen, ist als solche bekannt.

Es ist verständlich, daß der sogenannte Stanzkopf, der im Bekannten am beweglichen Pressenteil befestigt ist, was jedoch im Rahmen der Erfindung nicht unbedingt sein muß, Einbauplatz benötigt, wobei im Interesse des Erreichens einer möglichst hohen Stückzahl die Pressenhübe, die während des Vorschubs des in aller Regel endlos vom Coil laufenden Bleches durchgeführt werden, längenmäßig möglichst gering sein sollten. Wenngleich die Stanzköpfe selbst relativ flach gebaut werden können, ergibt sich für die gesamte Befestigungsvorrichtung dadurch ein größerer Platzbedarf, daß die zu befestigenden Elemente dem Stößelkanal des Stanzkopfes in einem Bereich unterhalb des zurückgezogenen Stößels in einen Stößelkanal zugeführt werden müssen.

Eine Bauhöhenoptimierung ergäbe sich grundsätzlich durch eine senkrecht zur Stößelachse erfolgende Zuführung der Elemente in den Stößelkanal des Stanzkopfes, wobei zur Vermeidung des Bauaufwands bei einem älteren Vorschlag der Anmelderin in den unmittelbaren Stößelkopfbereich mittels Staudruck gefördert wird, d.h. die bolzenförmigen Elemente werden aus einer Sortierstation, beispielsweise einem Magnetschwingförderer einer in sich gelenkigen, aufgehängten, zweispurigen Schiene zugeführt und von dieser an ihrem Kopf ergriffen, so daß sie dann die Schiene unter Schwerkraft abwärts rutschen, bis sie im Bereich des Niederhalters der Presse auf vor dem Stößelkanal auf ihren Einsatz wartende Schrauben treffen und diese dann durch die nachfolgenden, der Schwerkraft ausgesetzten Schrauben unter Wirkung des sogenannten Staudrucks in den Stößelkanal gelangen.

Dieser Vorschlag besitzt jedoch den Nachteil, daß aufgrund der Abhängigkeit der Förderung vom Staudruck bereits geringste Störungen, seien es Verschmutzungen, die zum Verklemmen der Schrauben führen, oder seien es im Gelenkbereich der Schiene auftretende Störungen, die ein Weiterrutschen der Schrauben nicht gestatten, zu zu niedrigem Staudruck im Bereich des Stanzkopfes führen, wodurch entweder gar keine Schraube in den Strößelkanal gelangt oder zumindest keine exakte Positionierung der Schraube im Stößelkanal bewirkt wird, was dann bei niedergehendem Stößel zu erheblichen Behinderungen, ja sogar Zerstörungen am bzw. des Stanzkopf(es) führen kann. Darüber hinaus ist eine exakte Positionierung der Schrauben mittels einer diese am Kopf tragenden, zweigleisigen Schiene dann äußerst schwierig, wenn die Unterseite des Schraubenkopfes strukturiert ist, weil dann eine exakte, winkelgerechte Auflage auf der Schiene nicht mehr gegeben ist, was zu einer unausgerichteten, den Anbringvorgang be-, wenn nicht sogar verhindernden Positionierung im Stößelkanal führt.

Bekannt ist weiterhin ein Verfahren zum Verbinden wenigstens eines ersten Werkstückes mit einem zweiten Werkstück in einem als Stanz- und/oder Umformwerkzeug ausgebildeten Folgewerkzeug, sowie ein derartiges Folgewerkzeug (DE-A-39 37 903). Diesen bekannten Vorschlag liegt die Aufgabe zugrunde, insbesondere hinsichtlich der Maßhaltigkeit der hergestellten Werkstücke, aber auch hinsichtlich einer Vereinfachung der Werkzeugkonstruktion und/oder Verbesserung der Betriebssicherheit, dem bis dahin bekannten Stand der Technik zu verbessern. Bei diesem bekannten Verfahren ist u.a. vorgesehen, das zweite Werkstückteil vor dem Einsetzen des ersten Werkstückteils zwischen einem Niederhalter und einem Gegenelement einzuspannen. Im Werkzeug wird dabei ein Stanzkopf ausgebildet, mit dem die ersten Werkstückteile (bolzenförmigen Elemente) in das jeweilige zweite Werkstückteil eingesetzt werden und dem die bolzenförmigen Elemente über eine ebenfalls im Werkzeug ausgebildete starre Zuführung zugeführt werden, und zwar von einer Beladeeinrichtung, der die ersten Werkstückteile über eine äußere Zuführung (Schlauch) zugeführt werden und an der die Werkstückteile mittels eines Schiebers in die starre Führung bewegt werden. Eine lagegenaue und damit auch störungsfreie Übergabe der bolzenförmigen Elemente an die starre Führung ist nicht gewährleistet.

Bekannt ist weiterhin ein Stanz- und Nietkopf für selbststanzende Befestigungselemente (DE 34 48 219), bei dem die Befestigungselemente über eine äußere Zuführung (Schlauch) an eine gegenüber dem Stanz- und Nietkopf seitlich versetzte Vereinzelungseinrichtung gefördert und dann jeweils einzeln mittels eines Schiebers an dem Stanz- und Nietkopf bewegt werden. Nachteilig ist u.a., daß die diesen Stanz- und Nietkopf bildenden Komponenten als Einzelteile am Werkzeug der Presse montiert sind und bei einem Austausch für Reparaturzwecke oder zur Umstellung der Presse auf andere zu verarbeitenden Bauteile einzeln demontiert wedern müssen.

Aufgabe der Erfindung ist es, eine Vorrichtung der eingangs genannten Art zu schaffen, die bei dem Vorteil einer minimalen Einbauhöhe eine vereinfachte Montage und ein vereinfachtes Austauschen der Vorrichtung ermöglicht.

Zur Lösung dieser Aufgabe ist eine Vorrichtung entsprechend dem kennzeichnenden Teil des Patentanspruches 1 ausgebildet.

Bei der Erfindung sind der Stanzkopf, die starre Zuführung und die Beladeeinheit über eine starre Verbindung, vorzugsweise über eine Trag- oder Montageplatte miteinander verbunden und bilden so eine als Ganzes handhabbare, d.h. montierbare oder demontierbare Baueinheit. Hierdurch ist eine einfache Montage und Demontage, insbesondere auch ein einfaches und schnelles Auswechseln der gesamten Vorrichtung im Reparaturfall und/oder bei Umstellung der Presse bzw. des dortigen Werkzeuges auf andere, zu verarbeitende Elemente usw. möglich. Erst durch diese Ausbildung der Vorrichtung als eine als Ganzes montierbare Funktions- und Baueinheit kann den besonderen Forderungen hinsichtlich des rationellen Einsatzes von teuren Pressen, wie sie beispielsweise im Automobilbau Verwendung finden, Rechnung getragen werden.

Durch die starre Zuführung zwischen Stanzkopf und Beladeeinrichtung ist auch bei der Erfindung eine genaue zuverlässige Zuführung der Elemente an den Stanzkopf gewährleistet, und zwar derart, daß die Beladeeinrichtung gegenüber dem Stanzkopf räumlich versetzt und seitlich am Werkzeug vorgesehen werden kann. Hierdurch ist eine niedrige Bauhöhe für die Vorrichtung insgesamt erreichbar.

Bei einer bevorzugten Ausführung der Erfindung weist die Beladebuchse eine die Elemente einzeln und in ausgerichteter Lage aufnehmende Aufnahmekammer auf. Um die Elemente in Kopflage in der Zuführung aufzureihen, ist die Ladebuchse für einen Vorschub senkrecht zur Stößelachse, vorzugsweise zugleich auch für einen Positionierhub parallel zur Stößelachse bewegbar.

Bei der Erfindung erfolgt das Zuführen der bolzenförmigen Elemente in den Stanzkopf entlang der starren Zuführung an einem der gegenwirkenden Pressenteile.

Die "gegenwirkenden Pressenteile" bedeuten im vorliegenden Zusammenhang die Teile der Presse, die direkt oder indirekt auf das zu verformende Werkstück, nämlich ein von einem Coil laufendes Blech, ein sonstiges Blech oder eine Tafel einwirken, beispielsweise der auf- und ab- gehende Niederhalter, einerseits und das mit diesem während des Verformungsvorgangs zusammenwirkende Gegenwerkzeug, andererseits, beispielsweise eine über eine Aufspannplatte am Pressentisch befestigte Zwischenplatte.

Wenn nachfolgend von "Kopfführung" gesprochen wird, dann ist hiermit jegliche Führungs- oder Zuführungsart der bolzenförmigen Elemente genannt, die (Zuführungsart) am Kopf der Elemente erfolgt. Die Aufnahme der bolzenförmigen Elemente in der Aufnahmekammer der Ladebuchse ermöglicht es, daß die bolzenförmigen Elemente störungsfrei in gegenseitiger Reihenanlage (Kopfanlage) in die starre Zuführung eingebracht werden.

Der überraschende und mit einfachen Mitteln zu erreichende Vorteil der erfindungsgemäßen Lehre liegt darin, daß bei besonders geringem Platzbedarf und flacher Bauweise, die eine optimale Unterbringung der Befesitungsvorrichtung in einer Presse gestatten und damit ein besonders einfaches Nachrüsten ermöglichen, zwischen dem Stanzkopf der Befestigungsvorrichtung und ihrer Zuführung für die zu befestigenden Elemente keine Relativbewegung mehr stattfindet, so daß die eingangs erwähnten Zuführungsstörungen garantiert vermieden werden.

Im Zusammenhang mit der bereits zuvor erwähnten, besonders vorteilhaften Möglichkeit der Aufreihung unter gleichzeitig gezielter und ausgerichteter Förderung der einzelnen Elemente bis in den Stößelkanal des Stanzkopfes steht die besondere, erfindungsgemäße Beladeeinrichtung, die als Ladebuchse vielfältig variierbar ist und damit die Aufreihung optimal erreicht. Diese Ladebuchse, die in bevorzugter Ausführungsform zylinderbetätigt ist, nimmt die Elemente, insbesondere mit Köpfen versehene bolzenförmige, vorzugsweise Schrauben einzeln in ausgerichteter Lage fixiert auf und reiht sie dann in Kopfanlage auf.

Die Erfindung ermöglicht nicht nur eine kompakte und flache Bauweise der Befestigungsvorrichtung, sondern diese kann auch ohne weiteres an bereits existierenden Pressen nachgerüstet bzw. in diese eingebaut werden. Dazu wird eine starre Verbindung zwischen dem Stößelkanal bzw. dem Stanzkopf und dem Aufreihungspunkt bzw. der Beladeeinrichtung vorgeschlagen, die vorzugsweise aus einer am den Stanzkopf tragenden Pressenteil befestigten Trag- oder Montageplatte bestehen kann, die sowohl die Beladeeinrichtung als auch den Stanzkopf sowie die sich zwischen beiden erstreckende Förderstrecke oder Zuführung trägt. Damit wird eine in sich geschlossene, kompakte Baueinheit geschaffen, die für sich handelbar ist und mit geringem Umrüstaufwand jeder Zeit montiert oder auch zu Inspektionszwecken abgenommen werden kann und die drei wesentlichen Elemente umfaßt, nämlich die im einzelnen noch zu beschreibende Beladeeinrichtung, die in der Zuführung die Elementenreihe für die Zwangsförderung aufbaut, den grundsätzlich bekannten, mit der Erfindung jedoch ausgestalteten Stanzkopf sowie die starre Zuführung zwischen beiden.

Die Erfindung ermöglicht vorteilhaft, daß der Stanzkopf, die starre Zuführung und die Ladebuchse eine selbständig handhabbare Baueinheit bilden, so daß eine in sich geschlossene und insoweit komplette und autarke Einheit entsteht, die nur noch mit Versorgungsleitungen (Pneumatik-oder Hydraulikleitungen) und elektrischen Steuerleitungen zu verbinden ist, was die kompakte Bauweise besonders fördert. Diese in sich geschlossene Baueinheit bringt den zusätzlichen Vorteil der Möglichkeit mit sich, lageunabhängig einzubauen und arbeiten zu lassen. Als weiterer Vorteil ist der Wegfall der beim Stand der Technik erforderliche Montage- und Demontagearbeiten im Fall von Reparaturen und/oder Wartungen zu erwähnen, da beim Stand der Technik in diesen Fällen im Stanzkopfbereich zumindest teilweise demontiert werden muß.

Die kompakte Bauweise wird insbesondere auch dadurch erreicht, daß sich die Zuführung der Elemente an dem Pressenteil befindet, an dem auch der Stanzkopf festgemacht ist, wobei es im Rahmen der Erfindung grundsätzlich zwei Möglichkeiten gibt, nämlich eine Befestigung des Stanzkopfs einerseits am beweglichen Pressenteil, z.B. dem Niederhalter, oder andererseits am gegenüberliegenden, feststehenden Pressenteil, beispielsweise an der Zwischenplatte des Pressentisches bzw. im Bereich des darauf aufgebauten Schneideinsatzes. Für diese beiden Möglichkeiten braucht der Stanzkopf lediglich um 180° geschwenkt zu werden, d.h. im einen Falle arbeitet er beim Befestigen der Elemente von oben und im anderen von unten, wobei er im letztgenannten Fall relativ zum Fundament unbeweglich ist.

Eine Unabhängigkeit vom eingangs erwähnten Staudruck bei der Förderung der bolzenförmigen Elemente wird im Rahmen der Erfindung durch eine Zwangsförderung der aufgereihten Elemente, die sich in gegenseitiger Anlage befinden vom Punkt, an dem diese Aufreihung erfolgt (Beladepunkt), bis zum Stößelkanal erreicht, wobei vorzugsweise diese Zwangsförderung unter gegenseitiger Anlage der Köpfe der jeweils aus Kopf und Schaft bestehenden bolzenförmigen Elemente durch den Aufreihungsvorgang (Beladung) bewirkt wird. Dies bedeutet, daß mit jedem Anfügen eines neuen Elements an die Elementenreihe diese insgesamt um die Länge eines Kopfdurchmessers unter gegenseitiger Anlage der Köpfe der Elementenreihe in Richtung auf den Stößelkanal gedrückt, also zwangsgefördert wird, so daß bei jedem Beladevorgang ein Element exakt in den Stößelkanal des Stanzkopfes gelangt. Der Aufreihungspunkt ist die Stelle, an der die Reihe zusammengestellt wird, wozu es verschiedene Möglichkeiten gibt, von denen die erfindungsgemäß bevorzugte nachfolgend noch im einzelnen erläutert werden wird.

Um von der Kopfgeometrie der Elemente unabhängig zu sein, was insbesondere bei Schrauben, die an ihrer Kopfunterseite strukturiert sind, von besonderer Bedeutung ist, hat sich im Rahmen der Erfindung eine magnetische Überkopfförderung bewährt, d.h. die einzelnen Elemente haften während der Zuführung in Reihe mit ihren Köpfen an einer Magnetstrecke, wobei unter "Überkopfförderung" eine solche verstanden wird, bei der die Elemente mit obenliegendem Kopf zugeführt werden, beispielsweise bei im beweglichen Pressenteil angeordnetem Stanzkopf; selbstverständlich können auch bei der Anordnung des Stanzkopfes um 180° verschwenkt im feststehenden, unteren Pressenteil die Köpfe auf einer Magnetstrecke in Reihenanlage zum Stößelkanal zwangsgefördert werden.

Ein ganz besonderer Vorteil der Erfindung liegt darin, daß einerseits durch die Zwangsförderung Kopf an Kopf sowie die direkte Mündung der Zuführung in den Stößelkanal im rechten Winkel zur Stößelachse die Elemente bereits in der Reihe die ausgerichtete Position einnehmen, die für ihr reibungsloses Eintreiben in das Werkstück, nämlich fluchtend im Stößelkanal und zum Stößel erforderlich ist. Es bedarf somit nach Eintritt in den Stößelkanal keiner besonderen Ausrichtung der Elemente mehr, was nicht nur die Möglichkeit einer höheren Setzrate pro Zeiteinheit eröffnet, sondern auch zusätzliche Kontroll- und Ausrichtmaßnahmen im Stanzkopf überflüssig macht.

Wenngleich die magnetische Zuführung, insbesondere die Überkopfförderung für die bisher üblichen Anwendungsfälle voll und ganz ausreicht, kann es unter besonderen Umständen zweckmäßig sein, als Zuführung eine T-Nut-Führung vorzusehen, beispielsweise wenn nichtmagnetisierbare Element befestigt werden sollen, möglicherweise aus V2A-Stahl. Damit wird natürlich gleichzeitig auch eine zusätzliche Sicherung für magnetisierbare Elemente geschaffen, indem diese von der T-Nut gegen Herabfallen oder Umfallen dann gehalten werden, wenn aus irgendwelchen Gründen entweder der Magnet ausfallen sollte oder ein Element aufgrund irgendwelcher äußeren Einflüsse am Magnet nicht haften sollte. Zu erwähnen ist in diesem Zusammenhang, daß bei der magnetischen Zuführung die einzelnen Elemente in den Stößelkanal nicht nur fluchtend ausgerichtet, sondern auch exakt in der gewünschten Höhe unterhalb des Stößelkopfes eintreten. Bei nichtmagnetisierbaren Elementen kann die Höhenlage in einfacher Weise durch eine Schrägfläche an einer federbelasteten Klinke erreicht werden, die das jeweilige Element im Stößelkanal gegen den Stößelkopf drückt.

Für im unteren, feststehenden Pressenteil befestigte Stanzköpfe empfiehlt sich gleichermaßen eine T-Nut-Zuführung, die dann im Falle nichtmagnetisierbarer Elemente deren Umkippen verhindert, wobei für beide Versionen gilt, daß die Zwangsförderstrecke oder Zuführung vorzugsweise durch eine in vom Beladepunkt bis zum Stößelkanal angeordneten Magneten fluchtend durchgehend vorgesehene T-Nut gebildet wird. Hierfür empfehlen sich Permanantmagneten, jedoch können selbstverständlich auch Elektromagneten eingesetzt werden.

Die erfindungsgemäße Ladebuchse mit ihrer Aufnahmekammer für jeweils ein Element bzw. für jeweils eine Schraube besteht beispielsweise aus einem quaderförmigen Ladeblock, wobei sie in besonders praktischer Ausführung schlittengeführt und zylinderbetätigt ist, und zwar vorzugsweise durch wenigstens eine erste Kolben-Zylinder-Einheit für den Vorschub (Vorschubzylinder). Unter Berücksichtigung eines den Abmessungen eines Elementes entsprechenden Durchtritt durch den Ladebock kann dann durch gezieltes Hin- und Herfahren -gesteuert beispielsweise über Initiatoren oder Anschläge -mittels der ersten Kolben-Zylinder-Einheit, die vorzugsweise als doppelt wirkende Kolben-Zylinder-Einheit ausgebildet ist, Element für Element der starren Zuführung zugeführt und dort in Kopfanlage aufgereiht werden. Der Vorschubhub der gesamten Reihe von Elementen entspricht dabei dann jeweils den Durchmesser des Kopfes der Elemente. Hierfür führt die erste Kolben-Zylinder-Einheit bzw. der von dieser betätigte Schlitten jeweils einen genau definierten Hub aus. Dies wird vorzugsweise dadurch erreicht, daß die erste Koben-Zylinder-Einheit mit ihrer Kolbenstange über ein an der Trag- oder Montageplatte gehaltenes Widerlage ortsfest abgestützt ist, während der Zylinder in dem die Ladebuchse tragenden Schlitten eingearbeitet ist, so daß bei dieser Ausführung bei Druckbeaufschlagung des der Kolbenstange abgewandten Zylinderraums der Schlitten bei ortsfrest gehaltener Kolbenstange in Richtung auf den Stanzkopf so weit ausfährt, bis ein den Zylinderraum abschließender kobenseitiger Deckel in Anlage gegen die der Kolbenstange abgewandte Seite des Kolbens gelangt. Durch entsprechende Beaufschlagung des kolbenstangenseitigen Raumes des Zylinders wird der Schlitten zurückbewegt, und zwar - über mindestens einen Initiator gesteuert - exakt bis in die Aufnahmeposition der Ladebuchse.

Bei zylinderbetätigter Ladebuchse ist bevorzugt eine zweite Kolbe-Zylinder-Einheit (Positionierzylinder) vorgesehen, die die Ladebuchse für einen Positionierhub parallel zur Stößelachse bewegt. Nach beendetem Vorschubhub der ersten Kolben-Zylinder-Einheit wird die vorzugsweise ebenfalls als doppeltwirkende Kolben-Zylinder-Einheit ausgebildete zweite Koben-Zylinder-Einheit betätigt, die vorzugsweise über einen Träger mit der am Schlitten senkrecht zu dessen Bewegungsrichtung geführten Ladebuchse verbunden ist, und zwar mit ihrer Kolbenstange, während ihr Zylinder ebenfalls in dem Schlitten eingearbeitet ist. Hierdurch wird eine Bewegung der Ladebuchse senkrecht zur Zuführung, d.h. also parallel zur Längsachse der aufgreifenden Elemente bewirkt, wodurch sich die Ladebuchse von der Zuführung in Richtung des Schaftes der Element entfernt, und zwar über mindestens einen Initiator gesteuert soweit, bis das magnetisch und/oder mechanisch an der Zuführung gehaltene Element völlig aus der Aufnahmekammer herausgelangt ist. Hierdurch ist auch bei einer Aufnahmekammer in der Ladebuchse, in der die Elemente jeweils rundum geführt und gehalten ist, ein Abziehen der Ladebuchse von dem jeweiligen Element möglich. Im Anschluß daran wird die erste Kolben-Zylinder-Einheit für den Rückhub des die Ladebuchse tragenden Schlitten in die rückwärtige Endposition bewegt. Anschließend wird durch umgekehrte Aufschlagung der zweiten Kolben-Zylinder-Einheit die Ladebuchse wieder in ihre Aufnahmeposition gebracht. Die Ladebuchse hat dann insgesamt einen Rechteck-Weg zurückgelegt, und zwar mit folgenden vier Schritten:
Gezielter, exakt begrenzter Vorschub
senkrecht zur vorgenannten Bewegung bis zur Freigabe des Befestigungselementes
senkrecht zur vorgenannten Bewegung Rückzug
senkrecht zur vorgenannten Bewegung Rückbewegung in die Aufnahmeposition

Die Erfindung ermöglicht die Unterbringung der die Ladebuchse betätigenden, doppelwirkenden Kolben-Zylinder-Einheiten nebst ihrer Steuerung und ihren pneumatischen Versorgungsleitungen in einem Gehäuse, in das von außen lediglich noch ein an sich bekannter Multifunktionsstecker - im vorliegenden Fall für elektrische und pneumatische Versorgung - eingesteckt zu werden braucht, so daß eine perfekte, kompakte, außerordentlich leicht zu handhabende, Stanzkopf, störungsfreie Zuführung und Beladestation umfassende Baueinheit geschaffen wird.

Die Zuführung der Einzelelemente zur Ladebuchse kann in bekannter Weise von einer Schußstation erfolgen, der ein ebenfalls an sich bekannter Magnetschwingförderer vorgeschaltet ist. Um hier einen reibungslosen Übergang zur erfindungsgemäßen Vorrichtung zu erreichen, wird als Vorzugsausführung eine mit der Ladebuchse bzw. ihrer Aufnahmekammer in deren Aufnahmeposition fluchtende, direkt oder indirekt über die Trag- oder Montageplatte am Gehäuse befestigte Kupplungsaufnahme mit dem Kopfdurchmesser der Elemente entsprechendem Durchgang vorgeschlagen, die in weiterer Ausgestaltung der Erfindung an ihrem freien Ende lösbar mit einer ebenfalls einen Durchgang desselben Durchmessers besitzenden Kupplung zu verbinden ist, die vorzugsweise dem Anschluß eines die Elemente von der erwähnten Sortier- und Schußstation leitenden Schlauches dient.

Um sicherzugehen, daß durch einen entsprechenden pneumatischen Druckstoß (Schuß) tatsächlich ein Element in die Aufnahmekammer der Ladebuchse gelangt ist, und damit zu vermeiden, daß die Ladebuchse einen Leerhub durchführt, wird auf die Kupplung vorzugsweise koaxial ein den Schlauch umgebender Ringinitiator aufgesetzt, der bei jedem Vorbeieilen eines Elements ein entsprechendes Signal an die Steuerung der Ladebuchsenbewegung gibt, für welche Steuerung dem Fachmann bekannte Maßnahmen zur Verfügung stehen.

Damit nach Lösen der Kupplung von der Kupplungsaufnahme, in welchem Zustand sich die Kupplung dann am Ende des Schlauches befindet, nicht unbeabsichtigt noch eine geschossene Schraube den Schlauch verlassen und zu Zerstörungen oder gar Verletzungen führen kann, trägt die Kupplung eine Sperre, die bei Lösen der Kupplung von der Kupplungsaufnahme in den Durchgang ragt, wobei die Sperre vorzugsweise aus einer federbelasteten Klappe besteht, die sich im montierten Zustand außen an der Durchgangswand der Kupplungsaufnahme abstützt und bei Entkuppeln in den Durchgangsbereich der Kupplung schnappt.

Wie bereits erwähnt, kann der Einbau der erfindungsgemäßen Vorrichtung auch um 180° verschwenkt vorgenommen werden, wobei dann der Stanzkopf mit seinem Stößel von unten nach oben arbeitet, d.h. die bolzenförmigen Elemente mit ihrem Kopf nach unten zugeführt werden, was wiederum bedeutet, daß sie in die Ladebuchse zum Zwecke der Aufreihung ebenfalls mit ihrem Kopf nach unten beispielsweise geschossen werden, ohne eine zusätzliche Maßnahme jedoch aus der Aufnahmekammer herausfallen könnten. Hierfür sieht die Erfindung vor, daß die Ladebuchse bzw. ihre Aufnahmekammer mit einer Klemmeinrichtung versehen ist, die bis zur Übergabe des Elements an die Förderstrecke dafür sorgt, daß das Element in der gewünschten Position in der Aufnahmekammer der Ladebuchse verbleibt.

Der in seinem grundsätzlichen Aufbau und seiner Wirkungsweise als solcher bekannte Stößelkopf besitzt die nachfolgend dargelegten, im Rahmen der Erfindung vorgeschlagenen Besonderheiten. Im Sinne der erfindungsgemäß erreichten kompakten Bauweise der Befestigungsvorrichtung ist der Stößelkanal des Stanzkopfes zumindest teilweise in der Trag- oder Montageplatte eingearbeitet, wobei der Stanzkopf vorzugsweise aus mindestens zwei den Stößel führenden Teilen besteht, von denen das eine (Oberteil) lösbar in die Trag- oder Montageplatte integriert ist, während das andere (Unterteil) am Oberteil befestigt ist und beide Teile je eine miteinander fluchtende, dem Elementenkopf angepaßte Innenbohrung besitzen, die im wesentlichen den Stößelkanal bilden. Diese Zweiteiligkeit garantiert einerseits eine sichere Führung des Stößels sowie des in den Stößelkanal gelangenden und vom Stößel dann in das Werkstück einzusetzenden Elements und andererseits eine leichte Zugänglichkeit, indem zu Inspektions- und Wartungszwecken das Unterteil entfernt werden kann.

Im Sinne der magnetischen Überkopfführung der Elemente (Over-Head-System) ist zur Sicherung der lagegenauen Positionierung jedes des nach Verlassen der Förderstrecke in den Stößelkanal gelangenden Elementes der Stößel an seinem freien Ende, dem Kopf, mindestens mit einem Magneten versehen, der das Element von der Förderstrecke beim entsprechenden Förderhub der Ladebuchse tragend übernimmt.

Eine umwegfreie, direkte Übergabe jedes einzelnen Elements von der Förderstrecke in den Stößelkanal wird erfindungsgemäß dadurch erreicht, daß das Oberteil und das Unterteil zur Förderstrecke hin mindestens entsprechend den Elementenlängsquerschnittabmessungen geöffnet ist, so daß jedes Element ohne Änderung seiner Höhenlage gleitend von der Förderstrecke in den Stößelkanal gelangt, wo das magnetische Stößelkopfende exakt in der Höhe der Gleitbahn der Förderstrecke in den Stößelkanal ragt, so daß eine fluchtende Übergabe der Elemente erfolgt.

Zur zusätzlichen Sicherheit und Beladeprüfung ist im Oberteil des Stanzkopfes auf seiner der Förderstrecke abgewandten Seite ein federbelasteter Stift in Höhe der Kopfebene vorgesehen, der in den Stößelkanal hineinragt und, sobald ein Element in diesen gelangt, von dessen Kopf fluchtend in die Wandung gegen die Federkraft gedrückt wird und dabei einen Initiator aktiviert, der die positive, lagegenaue Beladung signalisiert. Auch dieses Signal wird in an sich bekannter Weise verarbeitet und zur Steuerung des Setzhubes, mit dem das Element in das Blech bzw. die Platte gedrückt und/oder befestigt wird, verwendet.

Wenngleich aus der vorangegangenen Beschreibung deutlich wird, daß durch die erfindungsgemäße Kopfförderung mit dem exakt dem Kopfdurchmesser entsprechenden jeweiligen Vorschub bei entsprechender Betätigung der Ladebuchse eine genaue Positionierung jedes Elements fluchtend im Stößelkanal sichergestellt ist, bedeutet es eine zusätzliche Sicherheitsmaßnahme, wenn nach einem weiteren Merkmal der Erfindung im Oberteil in Höhe des zuvor erwähnten, den Initiator aktivierenden Stiftes bzw. des Kopfes des jeweils in den Stößelkanal geförderten Elementes mindestens eine ebenfalls federbelastete Klinke angeordnet ist, die bei leerem Stößelkanal ebenfalls in diesen hineinragt und vorzugsweise mit ihrer Längsachse den Stößelkanal außermittig zur Förderstrecke hin versetzt schneidet und sich zu ihrem freien Ende hin verjüngt. Wenn nun ein Förderhub zur Beladung des Stößelkanals erfolgt, gelangt der Kopf des vordersten Elements der Förderstrecke mit der der Förderstrecke zugewandten Schrägfläche der Verjüngung der Klinke in Druckeingriff, wodurch die Klinke gegen den besonders starken Federdruck soweit zurückgeschoben wird, daß das Element die Klinkenstelle passieren kann, woraufhin die Klinke wieder vorspringt und nunmehr mit der dem Stößelkanal zugewandten Schrägfläche ihrer Verjüngung rückwärtig auf den Elementenkopf derart einwirkt, daß das Element satt an die gegenüberliegende Stößelkanalwand, die in ihrer Form und Größe dem Kopfradius angepaßt ist, lagegesichert gedrückt wird.

In weiterer Ausgestaltung kann jedes Klinkenende spitz zulaufen und die zum Stößelzentrum gerichtete Klinkenfläche in der Vertikalrichtung derart schräg zurückspringen, daß sie den Kopf des jeweils gerade im Stößelkanal befindlichen Elements untergreift, was besonders in den Fällen von Bedeutung ist, in denen nichtmagnetisierbare Elemente verarbeitet werden, die zwar in der T-Nut der Förderstrecke auf der gewünschten Höhe gehalten werden, im Moment ihres Eintritts in den Stößelkanal jedoch in Längsrichtung wegen der fehlenden Magneteinwirkung keinen Halt hätten, durch die erwähnten Schrägflächen der Klinken jedoch nicht nur gegen die gegenüberliegende Stößelkanalwand sondern auch an das freie Ende des Stößels gedrückt werden, der dann beim Setzvorgang das Element in Richtung auf das offene Stanzkopfende hin an der Schrägfläche der Klinke unter deren Zurückdrücken vorbeischiebt.

Aus reinen Zusatzsicherheitsvorkehrungen können schließlich im Stanzkopfunterteil mehrere, vorzugsweise drei um 120° versetzt angeordnete, federbelastete, in den Stößelkanal bis nahe an den Elementenschaft hineinragende Schieber vorgesehen sein, die bei ordnungsgemäßem Setzvorgang durch den vorbeifahrenden Elementenkopf zwar in die Stanzkopfwandung zurückgedrückt werden, jedoch in dem höchst unwahrscheinlichen Fall, daß das Element nicht ordnungsgemäß am Stößelkopf gehalten wird, dieses an einem vorzeitigen, ungewollten Verlassen des Stößelkanals hindern.

Die Stößelbewegung relativ zum Stanzkopf wird vom Pressenstößel initiiert, mit dem das dem Stanzkopf abgewandte Ende direkt oder indirekt kraftschlüssig verbunden ist, und zwar vorzugsweise durch entsprechenden Einbau in die Kopfplatte oder eine an diese montierte Stempelhal-teplatte.

Für den Fall, daß der Einpreßstößel des Stanzkopfes über den Pressenstößel bzw. dessen Kopfplatte oder Stempelhalteplatte in seiner Ausgangslage relativ zur Förderstrecke nicht genau justierbar ist, was z.B. bei Exzenter- oder Kurbelpressen der Fall sein kann, sieht die Erfindung eine sogenannte "Plunger-Version" vor, bei der das dem Stößelkopf abgewandte Ende des Stößels des Stanzkopfes als druckfederbelasteter Plunger ausgebildet ist, wobei eine Führungshülse auf dem mit dem Niederhalter verbundenen Stanzkopf befestigt ist, in der der Plunger gelagert ist und unter dem Druck der Feder an das rückwärtige, lediglich den Durchtritt der Kolbenstange gestattende Ende in der Ausgangsposition in Anschlag gehalten wird, während das freie Kolbenstangenende dann Abstand zur Kopf- oder Stempelhalteplatte bzw. zum Pressenstößel aufweist und bei Niedergang des Pressenstößels in Anlage gerät und mit dem weiteren Niedergang in den Stößelkanal zur Einwirkung auf das im Stößelkanal gerade befindliche Element bis zu dessen Befestigung an dem Blech oder der Platte gedrückt bzw. geschoben wird. Bei Rückzug des Pressenstößels bewirkt dann die Druckfeder in der Führungshülse die Rückführung des Plungers exakt in die Ausgangsposition.

### Kurze Beschreibung der Erfindung

Weitere Merkmale der Erfindung ergeben sich aus den übrigen Unteransprüchen sowie der nachfolgenden Beschreibung der beigefügten Zeichnungen, anhand derer bevorzugte Ausführungsformen der Erfindung beschrieben werden. In den Zeichnungen zeigen:
- Fig. 1: in schematischer Vorderansicht die erfindungsgemäße Befestigungsvorrichtung als Baueinheit am die Hubbewegungen ausführenden Pressenteil montiert;
- Fig. 2: dieselbe Befestigungsvorrichtung als Baueinheit am gegenwirkenden, feststehenden Pressenteil montiert mit vom bewegten Pressenteil initiiertem Stößelvorschub;
- Fig. 3: die Befestigungsvorrichtung im Detail, teilweise geschnitten;
- Fig. 3A: einen Schnitt entlang der Linie A-A in Fig. 3;
- Fig. 3B: einen Schnitt entlang der Linie B-B in Fig. 3;
- Fig. 3C: einen Schnitt entlang der Linie C-C in Fig. 3; und
- Fig. 4: die sogenannte "Plunger-Version".

### Wege zur Ausführung der Erfindung

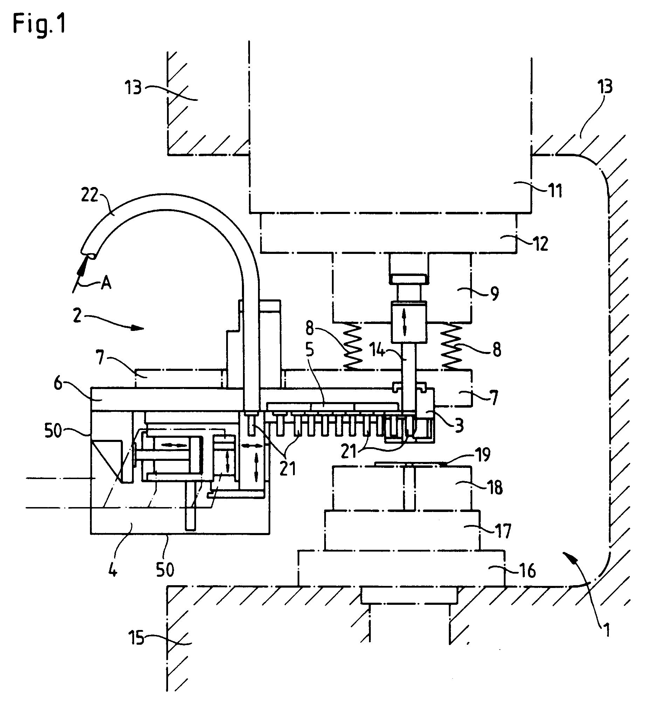

Die zum Einbau in eine übliche Presse 1 geeignete, erfindungsgemäße Befestigungsvorrichtung 2 besteht gemäß Fig. 1 im wesentlichen aus einem Stanzkopf 3, einer Beladeeinrichtung 4 sowie einer diese beiden Teile verbindenden Förderstrecke 5. Die im dargestellten Ausführungsbeispiel eine Baueinheit bildende Befestigungsvorrichtung wird in ihren genannten drei wesentlichen Bestandteilen von einer Trag- oder Montageplatte 6 zusammengehalten, die am Niederhalter 7 der Presse befestigt bzw. zumindest teilweise in diesen eingelassen ist. Der Niederhalter 7 ist mit Abstand über Federn 8 an einer Stempelhalteplatte 9 befestigt, die ihrerseits mit einer am Pressenstößel 11 montierten Kopfplatte 12 verbunden ist; der Pressenstößel 11 ist in üblicher Weise im Pressengestell 13 geführt.

Im Stanzkopf 3 ist ein Einpreßstößel 14 geführt, der den Niederhalter 7 in Gleitführung oder mit Spiel durchragt und an seinem oberen, dem Stanzkopf abgewandten Ende in der Stempelhalteplatte verankert ist.

Unterhalb des Stanzkopfes 3 befindet sich ein üblicher Preßtischaufbau mit einer auf dem Pressentisch 15 befestigten Aufspannplatte 16, die eine Zwischenplatte 17 trägt, auf der im dargestellten Ausführungsbeispiel ein Schneideinsatz 18 als Gegenwerkzeug befestigt ist. Auf dem Schneideinsatz liegt das zu verformende und mit einer oder mehreren Schrauben 21 zu versehende Blech 19. Wenn hier von "Blech" gesprochen wird, dann umfaßt dies sowohl von einem Coil zugeführte Endlosplatinen, die in verschiedenen Folgeschritten stufenweisen Verformungen unterworfen werden und an bestimmten Stellen dann gleichzeitig während des Verformungsschritts mit Schrauben versehen werden, als auch Platten od.dgl.. Der Begriff "Schraube" bezeichnet im vorliegenden Fall jegliche Art bolzenförmiger Elemente, die einen Kopf aufweisen.

Die am Blech 19 zu befestigenden Schrauben 21 werden der Beladevorrichtung 4 über einen Schlauch 22 in Pfeilrichtung A zugeführt, und zwar vorzugsweise von einer nicht dargestellten, an sich bekannten, pneumatisch wirkenden, sogenannten Schußstation aus, der eine Sortiervorrichtung vorgeschaltet ist. Die Schrauben 21 werden einzeln in die nachfolgend noch näher zu beschreibende Beladeeinrichtung 2 "geschossen". In ebenfalls noch näher zu beschreibender Weise gelangen die Schrauben 21 von der Beladeeinrichtung 4 über die Förderstrecke 5 in den Stanzkopf 3, der dann im beladenen Zustand mit dem Niederhalter 7 mitsamt der Förderstrecke 5 und der Beladeeinrichtung 4 als Baueinheit bis zum Anschlag auf das Blech 19 abgesenkt wird, woraufhin dann durch weiteres Absenken des Pressenstößels 11 der Einpreßstößel 14 durch den Stanzkopf mit vor dem Stößelkopf befindlicher Schraube 21 unter Zusammendrücken der Federn 8 geschoben und damit die Schraube 21 in das Blech 19 getrieben und an diesem in an sich bekannter Weise befestigt wird.

Um zumindest im der Beladeeinrichtung 4 nahen Bereich den Schlauch 22 auf alle Fälle biegungsfrei zu halten, kann dieser beim Ausführungsbeispiel gemäß Fig. 1 mittels eines nicht dargestellten, an der Kopfplatte 12 befestigten Halteblechs fixiert werden.

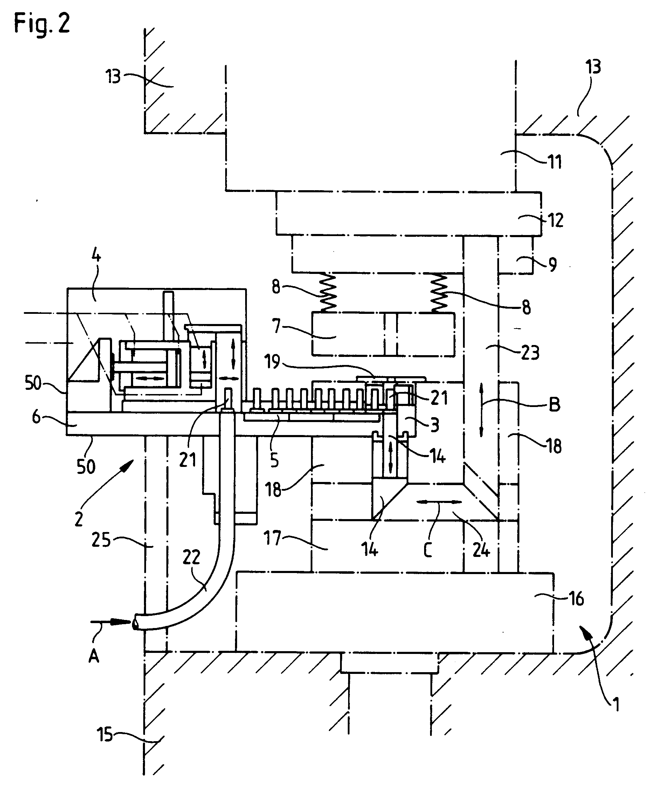

Bei der Ausführungsform gemäß Fig. 2 sind die wesentlichen Teile identisch mit denen der Ausführung gemäß Fig. 1, so daß für dieselben Teile dieselben Bezugsziffern verwendet werden und nachfolgend nur die zwischen beiden Versionen bestehenden Unterschiede zu beschreiben sind.

Bei dieser zweiten Ausführungsform ist die erfindungsgemäße Befestigungsvorrichtung als Baueinheit mit ihren an der Trag- oder Montageplatte 6 montierten Teileinheiten, Stanzkopf 3, Beladeeinrichtung 4 und Förderstrecke 5, in um gegenüber der Position in Fig. 1 180° verschwenkter Lage über die Trag- oder Montageplatte 6 am unteren, feststehenden Teil der Presse befestigt, und zwar im Bereich des Schneideinsatzes 18. Aufbau und Funktion sind grundsätzlich dieselben wie beim Ausführungsbeispiel gemäß Fig. 1, mit dem Unterschied, daß die Baueinheit 3, 4, 5, 6 während des Präge- und Befestigungsvorgangs in relativer Ruhe gegenüber dem Fundament bleibt, während die Bewegung des Einpreßstößels 14 wiederum durch das bewegliche Oberteil der Presse erfolgt, und zwar über einen mit der Kopfplatte 12 verbundenen Treiber 23, der den Pressenstößelbewegungen folgend gemäß Pfeil B vertikal hin- und herbewegt wird und mit seinem freien Ende derart auf einen Übersetzer 24 einwirkt, daß dieser gemäß Pfeil C eine horizontale Hin- und Herbewegung ausführt, die er dann unter weiterer Richtungsumlenkung auf den Einpreßstößel 14 überträgt, so daß mit dieser Antriebskombination die vertikalen Hin- und Herbewegungen des Pressenstößels 11 durch zweifache Richtungsumkehr um 90° in vertikale, jedoch der Pressenstößelbewegung entgegengesetzt gerichtete Auf- und Abbewegungen des Einpreßstößels 14 umgesetzt werden, d.h. das Niederfahren des Pressenstößels 11 bewirkt beim Einpreßstößel 14 eine nach oben gerichtete Bewegung und umgekehrt.

Wenn somit zunächst der Niederhalter 7 mit der Stempelhalteplatte 9 und der Kopfplatte 12 durch die Pressenstößelbewegung nach unten bis zur Anlage an dem Blech 19 fährt und sodann Pressenstößel 11, Kopfplatte 12 und Stempelhalteplatte 9 gegen die Federn 8 weiter nach unten fahren, wird der letztgenannte Teil der Bewegung derart auf den Einpreßstößel 14 übertragen, daß dieser im selben Maße unter Mitnahme einer Schraube 21 nach oben fährt, die er dann mit dem Schaft durch das Blech drückt und an diesem in bekannter Weise befestigt.

Wie aus Fig. 2 außerdem hervorgeht, ist bei diesem Ausführungsbeispiel der Niederhalter 7 schmaler ausgeführt, da er hier nicht die Tragefunktion für die Befestigungsvorrichtung erfüllt. Dafür ist eine auf dem Pressentisch befestigte Abstützung 25 vorgesehen, die mit ihrem freien Ende mit der Trag- oder Montageplatte 6 verbunden ist und so die Baueinheit 3, 4, 5 abstützt.

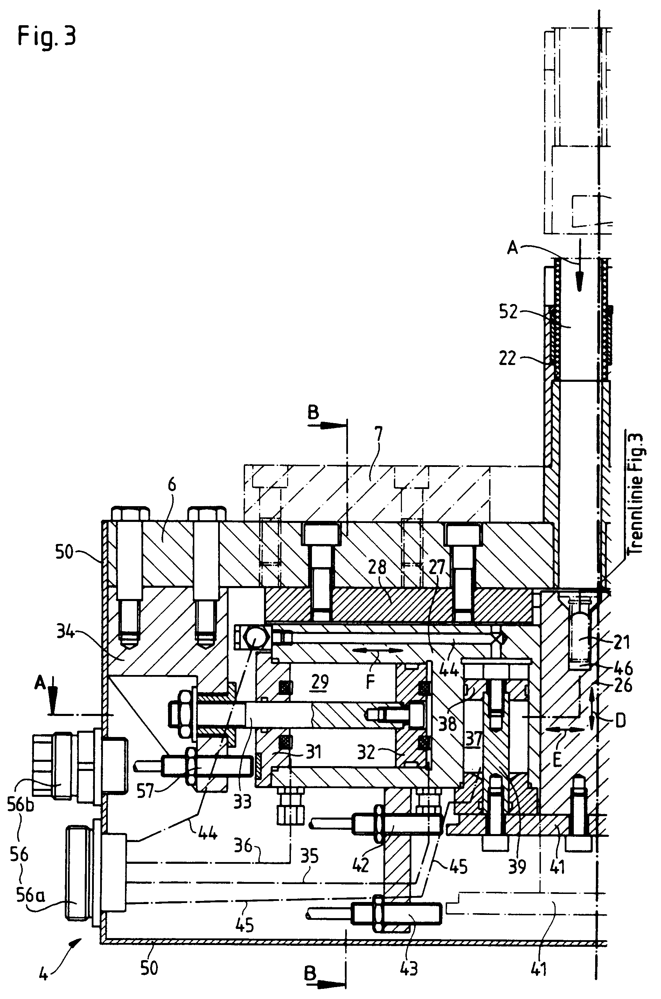

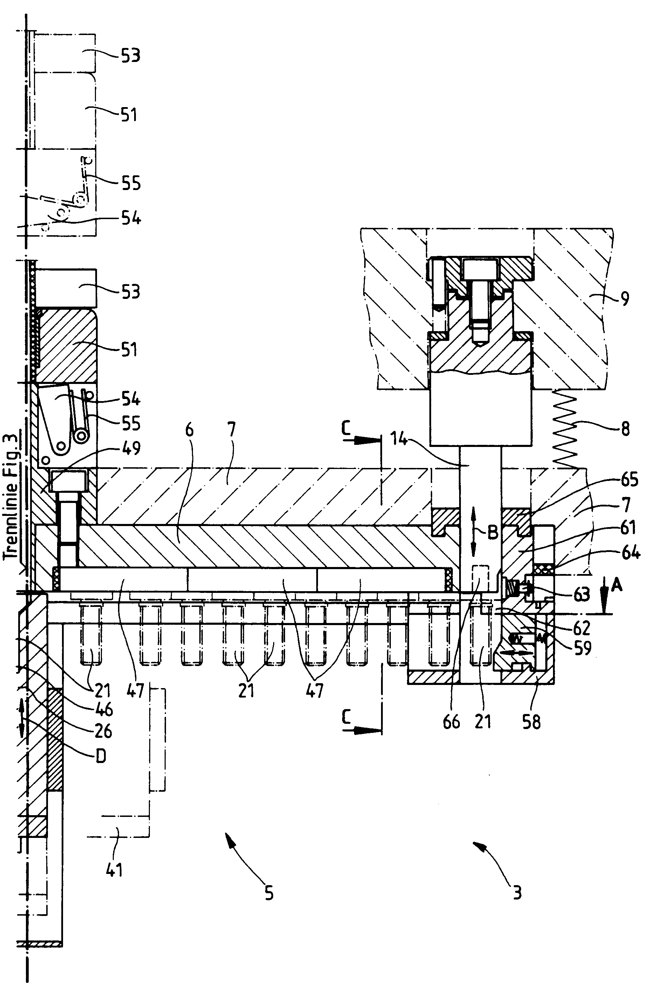

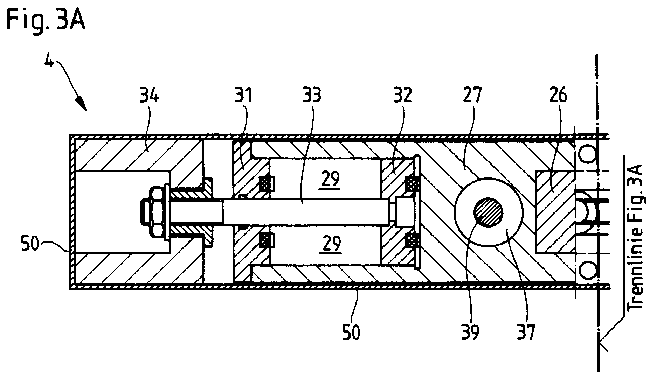

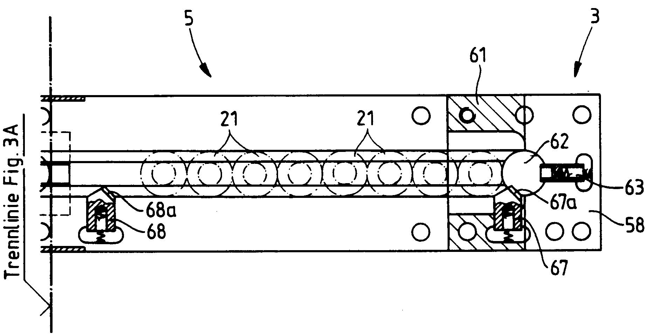

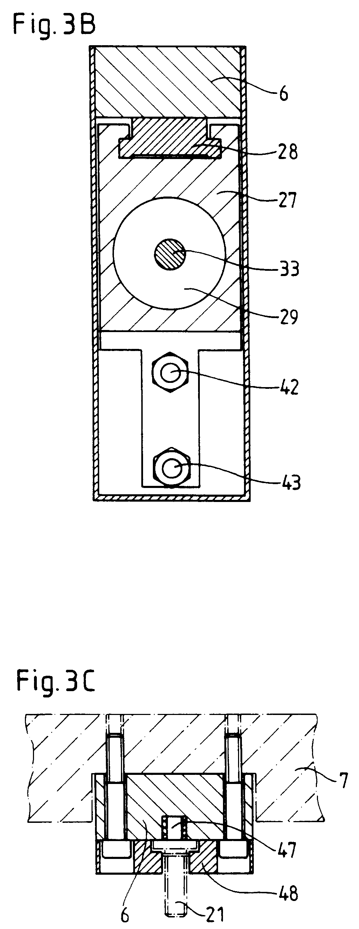

Anhand der Fig. 3 sowie der zugehörigen Schnitte gemäß den Fig. 3A, 3B und 3C werden nun Einzelheiten der erfindungsgemäßen Befestigungsvorrichtung erläutert. Eines der Kernstücke dieser Baueinheit ist die Ladebuchse 26, die aufgrund der nachfolgend beschriebenen Konstruktion die durch den vertikalen Doppelpfeil D und den horizontalen Doppelpfeil E symbolisierten Bewegungen ausführt. Dazu ist die Ladebuchse 26 mit ihrer in der Zeichnung links liegenden Vertikalfläche an der Stirnfläche eines Schlittens 27 vertikal geführt, der gemäß dem Doppelpfeil F horizontale Hin- und Herbewegungen ausführen kann. Dies wird dadurch erreicht, daß der Schlitten 27 oberseitig gemäß Fig. 3B an einer mit der Trag- oder Montageplatte 6 verbundenen T-Führung bzw. -Leiste 28 aufgehängt ist. Am der Ladebuchse 26 abgewandten Ende ist in den Schlitten 27 eine Zylinderbohrung 29 eingearbeitet, die mit einem Deckel 31 verschlossen ist und in der ein Kolben 32 horizontal hin- und herbeweglich gelagert ist, dessen Kolbenstange 33 den Deckel 31 nach außen durchragt und die mit ihrem freien Ende an einem von der Trag- oder Montageplatte 6 getragenen Widerlager 34 festgelegt ist. Diese Zylinder-Kolbeneinheit 29, 32, 33 (nachfolgend "Vorschubzylinder" genannt) ist doppelt beaufschlagbar und entsprechend mit zwei Zuleitungen 35 und 36 verbunden, von denen die Zuleitung 35 im Zylinder 29 vor dem Kolben 32, d.h. auf der der Kolbenstange abgewandten Seite des Kolbens mündet, während die Leitung 36 in den Zylinder 29 auf der Kolbenstangenseite führt, so daß bei pneumatischer oder hydraulischer Druckbeaufschlagung der Leitung 35 aufgrund der ortsfesten Verbindung der Kolbenstange 33 mit dem Widerlager 34 der Schlitten 27 mitsamt der Ladebuchse 26 eine Bewegung nach rechts durchführt, und zwar um eine genau bemessene Strecke, die sich durch den dann erfolgenden Anschlag des Deckels 31 an der kolbenstangenseitigen Kolbenfläche ergibt. Diese Endposition ist in Fig. 3 rechts gestrichelt dargestellt.

Im Schlittenbereich zwischen der Ladebuchse und dem Vorschubzylinder 29, 32, 33 befindet sich eine weitere, ebenfalls doppeltwirkende Kolben-Zylindereinheit (nachfolgend "Positionierzylinder" genannt), die durch eine vertikale Zylinderbohrung 37 im Schlitten 27 mit darin vertikal bewegbarem Kolben 38 und zugehöriger Kolbenstange 39 gebildet wird. In diesem Fall ist der Kolben 38 mit seiner Kolbenstange 39 bei entsprechender Druckbeaufschlagung beweglich, während die Zylinderbohrung 37 vertikal unbeweglich ist. Der Positionierzylinder 37, 38, 39 bewirkt die Vertikalbewegungen der Ladebuchse 26 gemäß dem Doppelpfeil D, und zwar dadurch, daß das dem Kolben 38 abgewandte Ende der Kolbenstange 39 mit einem sich horizontal bis in den Bereich unterhalb der Ladebuchse erstreckenden Ladebuchsenträger 41 fest verbunden ist, der seinerseits an der Ladebuchse 26 verschraubt ist.

Am Schlitten 27 sind unterseitig außerdem noch zwei Initiatoren 42 und 43 mit vertikalem Abstand angeordnet, die derart mit dem Ladebuchsenträger 41 zusammenwirken, daß sie die jeweiligen Ladebuchsen-Endstellungen anzeigen, und zwar der Initiator 42 die obere Endlage und der Initiator 43 die untere, in der Zeichnung gestrichelt symbolisierte.

Die Auf- und Abwärtsbewegung des Kolbens 38 mit seiner Kolbenstange 39 und somit der Ladebuchse 26 werden durch Hydraulik- oder Pneumatikleitungen 44 und 45 ermöglicht, von denen die Leitung 44 im oberhalb des Kolbens 38 liegenden Zylinderraum endet, während die Leitung 45 auf der Kolbenstangenseite des Kolbens 38 in die Zylinderbohrung 37 mündet. Wird nun in der dargestellten Position die Leitung 44 druckbeaufschlagt, so bewirkt dies ein Senken der Ladebuchse 26 während eine Druckbeaufschlagung der Leitung 45 zu einem Heben der Ladebuchse 26 führt.

Durch die für beide Zylinder-Kolbeneinheiten zuvor erläuterten Endanschläge wird eine exakte Positionierung der Ladebuchse 26 in den jeweiligen Lagen erreicht, wobei in der dargestellten Position, d.h. nach links-oben gefahren, die Ladebuchse 26 oberseitig eine nach oben offene Aufnahmekammer 46 besitzt, in die jeweils eine Schraube 21 gelangen kann, und zwar vorzugsweise mittels des bereits erwähnten pneumatischen "Schusses".

Sobald die Ladebuchse 26 mit einer Schraube 21 beladen ist, wird sie durch entsprechende, zuvor erläuterte Beaufschlagung des Vorschubzylinders 29, 32, 33 nach rechts bis zum Kolbenanschlag bewegt, wobei ihre freie Stirnseite auf den Kopf der links mit etwas Abstand von der übrigen Schraubenreihe hängenden Schraube 21 stößt. Der erwähnte Abstand wird sogleich im Zusammenhang mit den weiteren Bewegungen der Ladebuchse erklärlich. Die rechts von der Ladebuchse 26 gezeigten Schrauben 21 befinden sich bereits im Bereich der erfindungsgemäßen Förderstrecke, die hier aus mehreren, fluchtenden Magneten 47 besteht, die die Schrauben 21 über deren Köpfe in exakt der gewünschten Höhe halten. Die Magnete 47 sind in der aus Fig. 3C ersichtlichen Weise in die Trag- oder Montageplatte 6 eingelassen, die ihrerseits in der ebenfalls der Fig. 3C zu entnehmenden Weise am Niederhalter, zum Teil eingelassen, befestigt ist. Aus Fig. 3C geht auch die nach unten offene T-Führung bzw. T-Nut 48 in Form einer entsprechend ausgenommenen Leiste unterhalb der Magnete 47 hervor, die insbesondere im Falle der Verarbeitung nichtmagnetisierbarer Elemente als Überkopfführung des Over-Head-Systems dient.

Wie bereits erwähnt, werden die Schrauben 21 einzeln in die Ladebuchse 26 "geschossen', wozu im dargestellten Ausführungsbeispiel ein spezieller Anschluß des Schlauches 22 vorgesehen ist. Exakt oberhalb der in Fig. 3 dargestellten Ausgangsposition der Ladebuchse 26 befindet sich in koaxialer Ausrichtung eine an der Trag- oder Montageplatte 6 befestigte, den Niederhalter 7 durchragende Kupplungsaufnahme 49, deren Innendurchmesser ein ungestörtes, jedoch geführtes Hindurchgleiten der Schrauben garantiert. Auf diese Kupplungsaufnahme 49 wird die eigentliche Kupplung 51 gesetzt und beide in irgendeiner geeigneten Weise miteinander verbunden. Die Kupplung 51 ist fest haftend über das Ende des Schlauchs 22 geschoben, so daß der durch den Schlauch gebildete, in seinen Abmessungen ebenfalls dem Schraubenkopf angepaßte Kanal 52 sich übergangslos bis in die Aufnahmekammer 46 erstreckt. Oberhalb der Kupplung 51 ist ein den Schlauch 22 umgebender Ringinitiator 53 vorgesehen, der in der bereits erwähnten Weise jede passierende Schraube 21 registriert.

Wie die oberhalb des Ringinitiators 53 in Fig. 3 gestrichelte Darstellung zeigt, trägt die Kupplung eine seitlich neben dem Kanal auf einer Achse schwenkbar gelagerte Sperre in Form einer Klappe 54, die unter dem Einfluß einer Feder 55 nach links von außen gegen die Wand der Kupplungsaufnahme 49 gedrückt wird, so daß sie bei Lösen der Kupplung 51, wie oberhalb in Fig. 3 gestrichelt dargestellt, in den Kanal 52 schnappt, mit der Folge, daß selbst bei einem unbeabsichtigten "Schuß" auf keinen Fall eine Schraube den Schlauch 22 verlassen kann, so daß damit ein wirksamer Schutz für Personen und Maschinen erreicht wird.

Wie die vorstehenden Ausführungen deutlich machen, bedarf es somit lediglich eines mit wenigen Handgriffen zu vollziehenden Anschlusses des Schlauches 22, um die Beladung beginnen zu können, wobei noch zu erwähnen ist, daß es weiterhin der kompakten Bauweise und auch dem störungsfreien, weitestgehend vor äußeren Einflüssen geschützten Betrieb der Beladeeinrichtung 4 dient, daß diese bis auf den dem Stanzkopf 4 und der Förderstrecke 5 zugewandten Bereich mit einem Gehäuse 50 gekapselt ist, das an seiner Außenseite einen Multifunktionsstecker 56 trägt, über den sowohl die Hydraulik- bzw. Pneumatikleitungen 35, 36, 44 und 45 zu speisen sind (56a) als auch der Elektroanschluß 56b zu erreichen ist.

Nach Beladen der Ladebuchse 26 wird durch geeignete Initiatorsteuerung od.dgl. der Vorschubzylinder über die Leitung 35 druckbeaufschlagt, so daß der Schlitten 27 mit der Ladebuchse 26 nach rechts bis zur gestrichelt eingezeichneten Vorschub-Endstellung fährt, in der dann die in der Aufnahmekammer 46 befindliche Schraube 21 in die in Fig. 3 rechts neben der Ladebuchse 26 dargestellte Position gelangt, d.h. einen Abstand in der Größe der Wanddicke der Ladebuchse von der nächsten Schraube der Reihe einnimmt. Nun wird durch Druckbeaufschlagung des Positionierzylinders über die Leitung 44 die Ladebuchse in der vorgeschobenen Position auf ihre untere Stellung, wie sie in Fig. 3 in der rückgezogenen Position in Höhe des Initiators 43 gestrichelt dargestellt ist, gegenüber dem Schlitten 27 verfahren, wodurch die Oberkante der Ladebuchse unterhalb der Schraube 21, die an der Magnetführung 47 "klebt", gelangt. Durch Druckbeaufschlagung des Vorschubzylinders über die Leitung 36 erfolgt der Rückzug des Schlittens 27 mit der in der unteren Position befindlichen Ladebuchse 26, die dann bei Erreichen der hinteren Position, die ein Initiator 57, der ebenfalls an dem Widerlager 34 unterhalb der Kolbenstange 33 befestigt ist, meldet, wieder in die obere in Fig. 3 dargestellte Ladeposition durch Druckbeaufschlagung des Positionierzylinders über die Leitung 45 angehoben wird und dann zur erneuten Beladung zur Verfügung steht. Dieser Vorgang wird dann in mit der Stanzkopfarbeit abgestimmter Zeitfolge wiederholt, wobei bei jedem Vorschub der Ladebuchse unter Übergabe jeweils einer Schraube 21 an die Magnet-Förderstrecke 47 die jeweils letzte Schraube 21 in Kontakt an die vorletzte gebracht wird, so daß dann eine Reihe von Kopf an Kopf liegenden Schrauben 21 entsteht, die bei jedem Förderschritt der Ladebuchse exakt um den Durchmesser nach rechts verschoben wird, so daß dann die eingangs erwähnte, für den Setzvorgang erforderlich genaue Positionierung jeweils einer Schraube 21 im Stanzkopf ohne die

Notwendigkeit eines nochmaligen Umlenkens oder Positionierens garantiert erreicht wird. Die starre Kopfzuführung der Elemente in ihrer gegenseitigen Reihenanlage bis zum Stanzkopf ist deutlich auch aus Fig. 3A ersichtlich.

Der Stanzkopf 3 ist grundsätzlich als solcher bekannt und hinsichtlich seines Einbaus und seiner Betätigung bereits im Zusammenhang mit den Fig. 1 und 2 erläutert worden. Anhand von Fig. 3 sei noch auf einige Einzelheiten hingewiesen, so z.B. auf die daraus ersichtlichen, um jeweils 120° versetzt im Stanzkopfunterteil 58 angeordneten, federbelasteten Schieber 59 als Zusatzsicherung, deren Funktion zuvor bereits beschrieben wurde. Des weiteren ist aus Fig. 3 ersichtlich, daß im Oberteil 61 des Stanzkopfes 3 in Höhe der Kopfebene der Schrauben 21 ein in den Stößelkanal 62 hineinragender Stift 63 auf der der Förderstrecke 5 gegenüberliegenden Seite in die Wand eingelassen ist, der, wie Fig. 3 zeigt, bei mit einer Schraube 21 ordnungsgemäß beladenem Stanzkopf gegen die Federkraft in die Wandung des Oberteils 61 des Stanzkopfes gedrückt wird und dabei einen Initiator 64 zur Anzeige ordnungsgemäßer Beladung aktiviert.

Oberseitig ist in die Trag- oder Montageplatte 6 ein den Stößel 14 umgreifender Zentrierring 65 eingelassen, bis zu dem das in der Stempelhalteplatte 9 befestigte Ende des Einpreßstößels 14 unter Zusammendrücken der Feder 8 durch den Niederhalter hindurch abgesenkt werden kann. In den Kopf des Stößels 14 ist mindestens ein Magnet 66 zur haltenden Übernahme der jeweils in den Stößelkanal 62 geförderten Schraube 21 eingelassen.

Fig. 3A zeigt sehr anschaulich die im Bereich der Förderstrecke 5 befindliche Schraubenreihe sowie eine federbelastete Klinke 67, die ebenfalls in Höhe des Stiftes 63 bzw. der Kopfebene der Schraubenreihe im Oberteil 61, in den Stößelkanal 62 seitlich hineinragend angeordnet ist. Die Funktion der Klinke 47 zum satten Andrücken jeder Schraube 21 an die Innenwandung des Stößelkanals 62 wurde zuvor bereits im einzelnen dargelegt, wobei im vorliegenden Zusammenhang noch darauf hinzuweisen ist, daß die im Falle nichtmagnetisierbarer Schrauben vorgesehene Schrägfläche, über die die gerade im Stößelkanal 62 befindliche Schraube 21 in Anlage an den Kopf des Stößels 14 gedrückt wird, in Fig. 3A mit 67a bezeichnet ist. In der dargestellten Position der Klinke 67 ist der Stößelkanal 62 nicht beladen, so daß die Klinke 67 relativ weit in den Kanal 62 hineinragt.

Die im linken Bereich der Förderstrecke 5 eingezeichnete, ähnlich aufgebaute Klinke 68, die für den Fall nichtmagnetisierbarer Schrauben 21 mit einer entsprechenden Schrägfläche 68a ausgestattet ist, ist eine Vorsorgemaßnahme, die der zusätzlichen Sicherheit dient, da die erfindungsgemäße Zwangsförderung für sich bereits den lagegenauen Vorschub der Schrauben bis in den Stößelkanal garantiert.

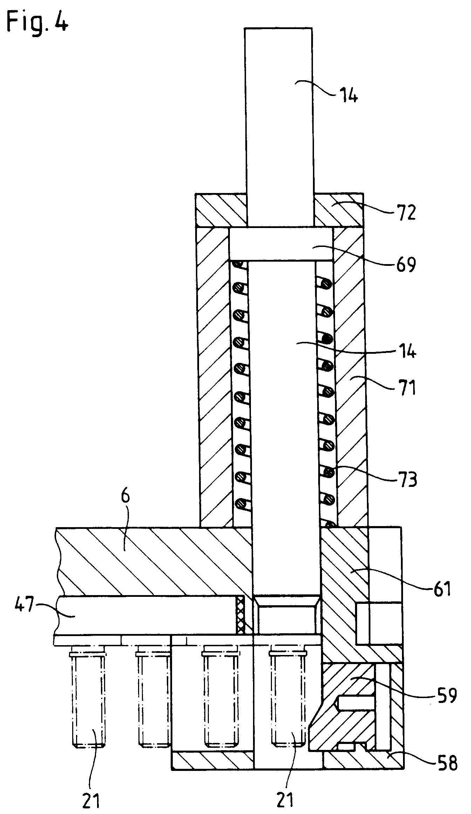

Anhand von Fig. 4 wird schließlich die hinsichtlich ihres bevorzugten Einsatzes bereits angesprochene Plunger-Version erläutert. Bei dieser Ausbildung des Stanzkopfes 3 ist der Stößel 14 über einen Bund in einer Hülse 71 geführt, die oberseitig mit einem Deckel 72 verschlossen ist, der mittig zwar eine entsprechende Bohrung für den Durchtritt des sich über den Bund 69 hinaus verlängernden freien Stößelendes besitzt, jedoch innenseitig einen Endanschlag für den Bund 69 und damit auch für den Einpreßstößel 14 in seiner obersten Stelle bildet, in der der Stößelkopf bündig in Flucht mit der Magnetzuführung 47 zur reibungslosen Aufnahme der Schrauben 21 liegt. In der dargestellten Position befindet sich der Stößel 14 in dieser obersten Stellung, und zwar unter der Wirkung einer sich unten an der Oberseite der Trag- oder Montageplatte 6 und oben an der Unterseite des mit seiner Oberseite am Deckel 72 anliegenden Bundes 69 abstützenden Druckfeder 73. Mit dieser Version ist die obere präzise Endlage des Stößels 14 unabhängig von der Einstellung des Pressenstößels garantiert, so daß sich diese Version beispielsweise für Kurbelpressen anbietet.

Im Rahmen der Erfindung sind selbstverständlich Abwandlungen der beschriebenen und dargestellten Ausführungsbeispiele möglich. So können z.B. mehrere Stanzköpfe 3 bzw. Stößelkanäle 62 in einer Baueinheit 2 vorgesehen sein, ohne den Baueinheitscharakter aufgeben zu müssen. Andererseits ist es auch möglich, mit nur einer Förderstrecke 5 mehrere, vorzugsweise zwei, Stößelkanäle 62 zu versorgen, wobei sich eine Parallelführung empfiehlt, die sogar die Zuführung von Schrauben unterschiedlicher Größe zuläßt.

### Gewerbliche Anwendbarkeit

Mit der Erfindung wird die Befestigung bolzenförmiger Elemente, insbesondere Schrauben, an einem Blech oder einer Tafel geschaffen, die durch ihre erheblichen Vorteile, insbesondere hinsichtlich der Handhabungsmöglichkeiten als Baueinheit und Zuverlässigkeit die Sicherheitsanforderungen nicht nur erfüllt, sondern in ihrer Funktionstüchtigkeit bei gleichzeitig hoher Wirtschaftlichkeit eine vielfältige und breite Anwendung auf dem einschlägigen technischen Gebiet gestattet.

## Patentansprüche

1. Vorrichtung zur Verwendung an einem in einer Presse (1) montierten Werkzeug (7, 9, 12; 16, 17, 18) und zum Befestigen bolzenförmiger Elemente (21), insbesondere Schrauben an einem Blech (19), einer Tafel oder dgl.,
mit einem Stanzkopf (3) mit Stößel (14) und Stößelkanal, mit einer starren Kopfzuführung (5), über die die Elemente in gegenseitiger Reihenanlage dem Stanzkopf (3) von einer Beladeeinrichtung (4) zugeführt werden,
gekennzeichnet durch eine die Elemente einzeln in ausgerichteter Lage fixiert aufnehmenden und dann in Kopfanlage aufreihenden Ladebuchse (26) als Beladeeinrichtung (4),
wobei der Stanzkopf (3), die starre Zuführung (5) zwischen Beladeeinrichtung (4) und dem Stößelkanal sowie die Beladeeinrichtung (4) über eine starre Verbindung miteinander verbunden sind und eine selbständig handhabbare und als Ganzes montierbare Baueinheit bilden.

2. Vorrichtung nach Anspruch 1, dadurch gekennzeichnet, daß die Ladebuchse (26) eine die Elemente (21) einzeln in ausgerichteter Lage aufnehmende Aufnahmekammer (46) besitzt, und daß die Ladebuchse (26) für die Aufreihung der Elemente (21) in der Zuführung (5) für einen Vorschub senkrecht zur Stößelachse sowie vorzugsweise zugleich auch für einen Positionierhub parallel zur Stößelachse bewegbar ist.

3. Vorrichtung nach Anspruch 1 oder 2, dadurch gekennzeichnet, daß die Zuführung (5) an ihrer Oberseite Magnete (47) aufweist, an denen die Elemente (21) an ihrem Kopf gehalten sind.

4. Vorrichtung nach einem der Ansprüche 1 - 3, dadurch gekennzeichnet, daß die Zuführung (5) als T-Nut-Führung, vorzugsweise als eine nach unten hin offene T-Führung ausgebildet ist.

5. Vorrichtung nach einem der Ansprüche 1 - 4, dadurch gekennzeichnet, daß zur Führung der Ladebuchse (26) ein Schlitten (27) vorgesehen ist.

6. Vorrichtung nach einem der Ansprüche 1 - 5, dadurch gekennzeichnet, daS die Ladebuchse (26) zylinderbetätigt ist, und zwar vorzugsweise durch wenigstens eine erste Kolben-Zylinder-Einheit (29, 32, 33) für den Vorschubhub sowie durch wenigstens eine zweite Kolben-Zylinder-Einheit (37, 38, 39) für den Positionierhub.

7. Vorrichtung nach Anspruch 6, dadurch gekennzeichnet, daß die die Ladebuchse (26) bewegenden Kolben-Zylinder-Einheiten (29, 32, 33; 37, 38, 39) doppeltwirkende Kolben-Zylinder-Einheiten sind.

8. Vorrichtung nach Anspruch 6 oder 7, dadurch gekennzeichnet, daß die erste Kolben-Zylinder-Einheit (29, 32, 33) mit seiner Kolbenstange (33) über ein an der Trag- oder Montageplatte (6) gehaltenes Widerlager (34) ortsfest abgestützt ist, während ihr Zylinder (29) in dem die Ladebuchse (26) tragenden Schlitten (27) eingearbeitet ist.

9. Vorrichtung nach einem der Ansprüche 6 - 8, dadurch gekennzeichnet, daß der zweite Kolben-Zylinder-Einheit mit ihrer Kolbenstange (39) über einen Träger (41) mit der am Schlitten (27) senkrecht zu dessen Bewegungsrichtung (F) geführten Ladebuchse (26) verbunden ist, während ihr Zylinder (37) in dem Schlitten (27) eingearbeitet ist.

10. Vorrichtung nach einem der Ansprüche 2 - 9, gekennzeichnet durch eine mit der Ladebuchse (26) bzw. ihrer Aufnahmekammer (46) in deren Aufnahmeposition fluchtende, direkt oder indirekt über die Trag- oder Montageplatte (6) mit einem Gehäuse (50) verbundene Kupplungsaufnahme (49) mit einem einem Kopfdurchmesser der Elemente (21) entsprechenden Durchgang zur lösbaren Aufnahme einer ebenfalls einen Durchgang (52) desselben Durchmessers bereitstellenden Kupplung (51) für eine Elementeneinzelzuführung.

11. Vorrichtung nach einem der Ansprüche 1 - 10, dadurch gekennzeichnet, daß die Ladebuchse (26) bzw. ihre Aufnahmekammer (46) mit einer Klemmeinrichtung versehen ist, die ein Herausfallen der Elemente (21) verhindert.

12. Vorrichtung nach einem der Ansprüche 2 - 11, dadurch gekennzeichnet, daS der Stanzkopf (3) einen Stößelkanal (62) aufweist, der zumindest teilweise in der Trag- oder Montageplatte (6) eingearbeitet ist.

13. Vorrichtung nach einem der Ansprüche 1 - 12, dadurch gekennzeichnet, daß der Stößel (14) an seinem freien Ende mindestens einen Magneten (66) trägt.

14. Vorrichtung nach Anspruch 12, gekennzeichnet durch einen in den Stößelkanal (62) auf der der Zuführung (5) abgewandten Seite hineinreichenden, federbelasteten und einen Initiator (64) aktivierenden Stift (63) in Höhe der Ebene der Köpfe der Elemente (21).

15. Vorrichtung nach einem der Ansprüche 1 - 14, gekennzeichnet durch mindestens eine federbelastete Klinke (67, 68) in der Zuführung (5) in Höhe der Köpfe der in dem Stößelkanal (62) geförderten Elemente (21).

16. Vorrichtung nach einem der Ansprüche 1- 15, dadurch gekennzeichnet, daS der Stößel (14) des Stanzkopfes (3) als druckfederbelasteter Plunger ausgebildet ist.

## Claims

1. Device for use on a tool (7, 9, 12; 16, 17, 18) mounted in a press (1), and for securing bolt-shaped elements (21), in particular screws on sheet metal (19), a panel, or similar,
with a punching head (3) with ram (14) and ram channel, with a rigid head feed (5), via which the elements are supplied to the punching head (3), in an arrangement of opposing rows, by a loading device (4),
characterized by a loading bush (26) as loading device (4), which receives the elements individually in an aligned position, and then lines them up by their heads,
whereby the punching head (3), the rigid feed (5) between the loading device (4) and the rain channel, as well as the loading device (4) are connected with, one another via a rigid connection, and form a construction unit which can be handled independently and can be mounted as a whole.

2. Device in accordance with claim 1, characterized in that the loading bush (26) has a receiving chamber (46) which accommodates the elements (21) individually in an aligned position, and that for lining up the elements (21) in the feed (5) for feeding forwards, the loading bush (26) can be moved perpendicular to the ram axis, and in addition preferably at the same time parallel to the ram axis for a positioning stroke.

3. Device in accordance with claim 1 or 2, characterized in that on its upper face, the feed (5) has magnets (47), on which the elements (21) are held by their heads.

4. Device in accordance with one of the claims 1 - 3, characterized in that the feed (5) is designed as a T-slot guide, preferably as a T-guide which is open to the bottom.

5. Device in accordance with one of the claims 1 - 4, characterized in that a slide (27) is provided for guiding the loading bush (26).

6. Device in accordance with one of the claims 1 - 5, characterized in that the loading bush (26) is cylinder-operated, and in fact preferably by at least one first piston-cylinder unit (29, 32, 33) for the forward-feed stroke, as well as by at least one second piston-cylinder unit (37, 28, 29) for the positioning stroke.

7. Device in accordance with claim 6, characterized in that the piston-cylinder units (29, 32, 33; 37, 38, 39) which move the loading bush (26) are double-acting piston-cylinder units.

8. Device in accordance with claim 6 or 7, characterized in that the first piston-cylinder unit (29, 32, 33), with its piston rod (33), is supported in a fixed position via a thrust plate (34) held on the support plate or mounting plate (6), whilst its cylinder (29) is integrated with the slide (27) carrying the loading bush (26).

9. Device in accordance with one of the claims 6 - 8, characterized in that the second piston-cylinder unit, with its piston rod (39), is connected via a carrier (41) to the loading bush (26) held on the slide (27), perpendicular to its direction of movement (F), whilst its cylinder (37) is integrated with the slide (27).

10. Device in accordance with one of the claims 2 - 9, characterized by a coupling receptacle (49) which is flush with the loading bush (26) or its receiving chamber (46) in that chamber's receiving position, and which is directly or indirectly connected, via the carrier plate or mounting plate (6), to a housing (50), with a passage of a diameter corresponding to the head diameter of the elements (21) to the detachable receptacle of a coupling (51) which also provides a passage (52) of the same diameter, for individual feeding of elements.

11. Device in accordance with one of the claims 1 - 10, characterized in that the loading bush (26) or its receiving chamber (46) is equipped with a clamping device which prevents the elements (21) from falling out.

12. Device in accordance with one of the claims 2 - 11, characterized in that the punching head (3) has a ram channel (62), which at least in part is integrated with the support plate or mounting plate (6).

13. Device in accordance with one of the claims 1 - 12, characterized in that the ram (14) supports at least one magnet (66) at its free end.

14. Device in accordance with claim 12, characterized by a pin (63) which extends into the ram channel (62) on the side facing away from the feed (5), is spring loaded, and activates an initiator (64), at the height of the level of the heads of the elements (21).

15. Device in accordance with one of the claims 1 - 14, characterized by at least one spring-loaded latch (67, 68) in the feed (5) at the height of the heads of the elements (21) which are transported in the ram chamber (62).

16. Device in accordance with one of the claims 1 - 15, characterized in that the ram (14) of the punching head (3) is designed as a compression-spring-loaded plunger.

## Revendications

1. Dispositif s'appliquant sur un outil (7, 9, 12; 16, 17, 18) monté sur une presse (1) et destiné à la fixation d'éléments (21) en forme de boulons, en particulier de vis sur une tôle (19), une table ou analogue, comportant une tête d'estampage (3) équipée d'un coulisseau (14) et d'un canal de coulisseau, avec un système rigide d'alimentation (5) de la tête par l'entremise duquel les éléments, disposés en rangée serrée, sont acheminés à la tête d'estampage (3) par un dispositif de chargement (4), caractérisé en ce que le dispositif de chargement (4) est formé d'un chargeur (26) qui reçoit les éléments fixés individuellement en position alignée et les met en rangée dans la tête, la tête d'estampage (3), le système d'alimentation rigide (5) entre le dispositif de chargement (4) et le canal de coulisseau ainsi que le dispositif de chargement (4) étant raccordés l'un à l'autre par une liaison rigide et formant une structure unitaire qui peut être manipulée de manière autonome et montée comme un tout.

2. Dispositif selon la revendication 1, caractérisé en ce que le chargeur (26) possède une chambre réceptrice (46) recevant les éléments (21) individuellement en position alignée et en ce que le chargeur (26) pour la mise en rangée des éléments (21) dans le système d'alimentation (5) peut être déplacé perpendiculairement à l'axe du coulisseau pour effectuer un avancement et, de préférence, parallèlement à l'axe du coulisseau pour effectuer une course de positionnement.

3. Dispositif selon la revendication 1 ou 2, caractérisé en ce que le système d'alimentation (5) présente sur son côté supérieur des aimants (47) par lesquels les éléments (21) sont maintenus sur leur tête.

4. Dispositif selon l'une quelconque des revendications 1 à 3, caractérisé en ce que le système d'alimentation (5) se présente sous la forme d'une coulisse à rainure en T, de préférence d'une coulisse en T ouverte vers le bas.

5. Dispositif selon l'une quelconque des revendications 1 à 4, caractérisé en ce qu'un chariot (27) est prévu pour guider le chargeur (26).

6. Dispositif selon l'une quelconque des revendications 1 à 5, caractérisé en ce que le chargeur (26) est commandé par un cylindre, de préférence, par au moins une première unité à piston-cylindre (29, 32, 33) pour effectuer la course d'avancement ainsi que par au moins un seconde unité à piston-cylindre (37, 38, 39) pour effectuer la course de positionnement.

7. Dispositif selon la revendication 6, caractérisé en ce que les unités à piston-cylindre (29, 32, 33; 37, 38, 39) qui déplacent le chargeur (26) sont des unités à piston-cylindre à double effet.

8. Dispositif selon la revendication 6 ou 7, caractérisé en ce que la première unité à piston-cylindre (29, 32, 33) s'appuie de manière fixe, par sa tige de piston (33), sur une butée (34) portée par la plaque de support ou de montage (6), tandis que son cylindre (29) est monté dans le chariot (27) portant le chargeur (26).

9. Dispositif selon l'une quelconque des revendications 6 à 8, caractérisé en ce que la seconde unité à piston-cylindre est reliée, par sa tige de piston (39), via un support (41), au chargeur (26) guidé sur le chariot (27) perpendiculairement à sa direction de déplacement (F), tandis que son cylindre (37) est monté dans le chariot (27).

10. Dispositif selon l'une quelconque des revendications 2 à 9, caractérisé par un logement d'accouplement (49) s'alignant sur le chargeur (26) ou sa chambre réceptrice (46) dans leur position de réception et relié directement ou indirectement via la plaque de support ou de montage (6) à un boîtier (50), ledit logement ayant un passage correspondant à un diamètre de tête des éléments (21) pour recevoir de manière amovible un accouplement (51) formant également un passage (52) de même diamètre pour un acheminement individuel des éléments.

11. Dispositif selon l'une quelconque des revendications 1 à 10, caractérisé en ce que le chargeur (26) ou sa chambre réceptrice (46) est pourvu d'un dispositif de blocage qui empêche la chute des éléments (21).

12. Dispositif selon l'une quelconque des revendications 2 à 11, caractérisé en ce que la tête d'estampage (3) présente un canal de coulisseau (62) qui est aménagé au moins partiellement dans la plaque de support ou de montage (6).

13. Dispositif selon l'une quelconque des revendications 1 à 12, caractérisé en ce que le coulisseau (14) porte à son extrémité libre au moins un aimant (66).

14. Dispositif selon la revendication 12, caractérisé par une broche (63) passant par le canal de coulisseau (62) sur le côté opposé au système d'alimentation (5), sollicitée par un ressort et activant un initiateur (64), à hauteur du plan des têtes des éléments (21).

15. Dispositif selon l'une quelconque des revendications 1 à 14, caractérisé par au moins un cliquet (67, 68) sollicité par un ressort dans le système d'alimentation (5) à hauteur des têtes des éléments (21) acheminés dans le canal de coulisseau (62).

16. Dispositif selon l'une quelconque des revendications 1 à 15, caractérisé en ce que le coulisseau (14) de la tête d'estampage (3) se présente sous la forme d'un plongeur sollicité par un ressort de compression.
